# EUROPEAN PATENT SPECIFICATION

(11) **EP 3 736 069 B1**
(45) Date of publication and mention of the grant of the patent: **03.11.2021**
(21) Application number: 20180777.3
(22) Date of filing: 24.01.2018
(51) Int. Cl.: B23B 51/12, B25B 21/00, B25B 31/00, B23B 51/02, B23B 51/08

(54) **ANCHOR SETTING TOOL**
ANKERSETZWERKZEUG
OUTIL DE RÉGLAGE D'ANCRAGE

(30) Priority: 09.02.2017 JP 2017022204; 13.04.2017 JP 2017079393
(43) Date of publication of application: 11.11.2020
(62) Divisional of application: 18000060.6
(73) Proprietor: House B.M. Co., Ltd., Higashiosaka-shi, Osaka 577-0011 (JP)
(72) Inventor: AJIMI, Kunio, Higashiosaka-shi, Osaka 577-0011 (JP)
(74) Representative: Müller-Boré & Partner Patentanwälte PartG mbB

(56) References cited:
- WO-A1-2016/161523
- US-A- 4 867 249
- US-A1- 2008 226 407

## Description

### Technical Field

The present invention relates to a tool for drilling an anchor hole in a building component, such as a ceiling, and hammering an anchor into the anchor hole.

### Background Art

As means for installing a desired appliance or the like in a building component, such as means for hanging a subsidiary ceiling, a lighting apparatus or the like from a main concrete ceiling, performed is a way of drilling a hole in the main ceiling and hammering an anchor of an anchor bolt into the hole. To perform anchor setting described above, there has been known a tool disclosed in the Japanese examined design publication No. 1527335.

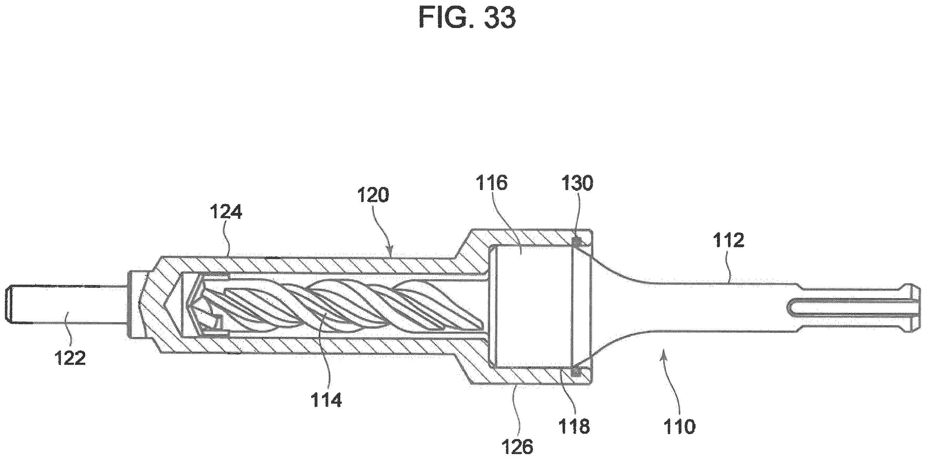

FIG. 33 is a cross sectional view showing an entire configuration of the tool. The tool includes a drill bit 110 and a hammering unit 120 to be detachably attached thereon.

The drill bit 110 integrally includes: a shank 112 which is a held part to be held by a not-graphically-shown tool driving device generally called as a hammer drill; a drill cutting blade part 114 lying opposite to the shank 112 and having a shape to drill a hole at a hammering target when pressed against the target while being driven to be rotated; and a first fitting part 116 between the shank 112 and the drill cutting blade part 114. The first fitting part 116 has a cylindrical outer circumferential surface with a large diameter.

The hammering unit 120 is attached on the drill bit 110 so as to cover the drill cutting blade part 114 and has a shape capable of hammering and fixing an anchor to the bottom of the hole when driven to be axially reciprocated (preferably, to be axially reciprocated and rotated simultaneously) with use of the tool driving device in the attached state. Specifically, the hammering unit 120 includes: a drill cover part 124 having a cap shape to cover the drill cutting blade part 114; a hammering rod part 122 protruding beyond the front end of the drill cover part 124 and having a rod shape capable of applying strikes to the anchor; and a second fitting part 126 joined to the rear end of the drill cover part 124. The second fitting part 126 has a cylindrical inner circumferential surface with an inner diameter allowing the first fitting part 116 to be inserted into the second fitting part 126.

As means for enabling the first fitting part 116 to removably retain the second fitting part 126 thereon, a C-ring 130 is attached to the second fitting part 126. The C-ring 130 is fitted into a groove formed in the inner circumferential surface of the second fitting part 126 so as to be elastically deformable in an inner radial shift direction of the C-ring 130. The C-ring 130 has a smaller inner diameter than an outer diameter of the second fitting part 126 under free external force, thus protruding radially inward beyond the inner circumferential surface of the second fitting part 126.

With use of the tool for anchor setting, an anchor hole can be drilled at a predetermined place by the drill cutting blade part 114 of the rotationally driven drill bit 110 while the hammering unit 120 is removed from the drill bit 110 to expose the drill cutting blade 114. Thereafter an anchor is set deeply in the hole and the hammering unit 120 is attached to the drill bit 110 to drive to reciprocate them; this allows the hammering rod part 122 of the hammering unit 120 to apply strikes to the anchor to hammer it.

The attachment of the hammering unit 120 to the drill bit 110 is performed by inserting the drill cutting blade part 114 of the drill bit 110 into the hammering unit 120 through the second fitting part 126 and further inserting the drill bit 110 forcedly. The forced insertion causes the first fitting part 116 of the drill bit 110 to pass inside the C-ring 130 while pressing the C-ring 130 outward to be thereby inserted into the second fitting part 126. Upon completion of the insertion, the C-ring 130 elastically restores to be engaged with a rear end 118 of the first fitting part 116 as shown in FIG. 33, thereby preventing the hammering unit 120 from falling from the first fitting part 116.

After completion of the hammering, an operator can forcibly detach the hammering unit 120 from the drill bit 110 involving radially outward elastic deformation of the C-ring 130, for example, by gripping and strongly pulling the hammering unit 120 from the drill bit 110 leftward in FIG. 33.

This conventional art, however, has a problem of difficulty in establishing both of smooth attachment and detachment of the hammering unit 120 with respect to the drill bit 110 and reliably keeping the attached state of the hammering unit 120 in use thereof. The hammering unit 120 receives repetitive counterforces from the anchor due to the strike force while attached on the drill bit 110, the counterforces possibly causing the hammering unit 120 to fall from the first fitting part 116 if the engagement force is weak between the C-ring 130 and the rear end 118 of the first fitting part 116. Also during a trial operation (i.e., idle hammering) before an actual use, the second fitting part 126 may be brought into detachment from the first fitting part 116 due to an axial vibration given from a body of the electric tool device to the first fitting part 116. The detachment could be prevented by giving the C-ring 130 a small inner diameter to increase the engagement force; however, such a small diameter would hinder the C-ring 130 from radially outward deformation enough to allow the first fitting part 116 to be easily inserted into the second fitting part 126" or to be reversely detached therefrom.

US 2008/226407 A1 describes an apparatus which includes a rotatable device, which may be a keyless chuck, a keyless chuck adapter, a collet chuck, a collet adapter, a set screw bit retaining chuck, or a set screw bit retaining adapter.

WO 2016/161523 A1 describes a setting tool fastening system to engage an anchor in order to expand and set it in cementitious materials.

US 4 867 249 A describes a tool attachment for a percussion drill power tool which expands and sets, essentially but not limited to, fastening anchors used in concrete and masonry.

### Summary of Invention

An object of the present invention is to provide an anchor setting tool including a drill unit for drilling and a hammering unit adapted to hammer an anchor while being attached on the drill unit, the anchor setting tool being capable of smooth attachment and detachment of the hammering unit with respect to the drill unit and reliably keeping the hammering unit be attached.

Provided is an anchor setting tool as defined in claim 1.

According to the anchor setting tool, the radially outward elastic deformation in the main part of the retainer unit allows the locked part of the retainer unit to be retracted from the regular lock position to the retraction position (i.e., to be displaced radially outward from the lock position), thus allowing the second fitting part of the hammering unit to be freely attached to or detached from the first fitting part of the drill unit. This enables the hammering unit to be smoothly attached on or detached from the drill unit. Moreover, when the locked part is returned to the lock position by an elastic restoring force of the main part of the retainer unit while the second fitting part is fitted to the first fitting part, the locking portion of the first fitting part comes into axial contact with the locked part to lock it, thereby surely preventing the second fitting part from being removed from the first fitting part. Thus, the hammering unit is surely prevented from falling from the drill unit. The lock of the hammering unit to the drill unit is thus performed through the axial contact of the locked part retained in the lock position by the elastic restoring force of the main part of the retainer unit with the locking portion of the first fitting part; this makes it possible to reliably keep the hammering unit attached on the drill unit while allowing the hammering unit to be smoothly detached from the drill unit owing to the radially outward displacement of the locked part involving the elastic deformation in the main part of the retainer unit.

The main part of the retainer unit preferably has a shape extending circumferentially of the second fitting part to be fitted with an outer circumferential surface of the second fitting part. This shape enables the main part to be stably attached on the second fitting part.

More preferably, the outer circumferential surface of the second fitting part includes a circumferential groove extending circumferentially, and the main part of the retainer unit has a shape extending circumferentially while being fitted into the circumferential groove. The fitting of the main part in the circumferential groove enables the main part to be stably held by the second fitting part with utilization of the shape of the main part.

The first fitting part is formed with an locking recess having a depth enough to allow the leading end of the locked part in the lock position to be fitted into the locking recess, the first fitting part including a wall defining the locking recess, the wall including a portion located closer to the drill cutting blade part than the engagement part to serve as the locking portion. This structure enables the locking portion to be provided in the first fitting part without a significant change in the shape of the outer circumferential surface of the first fitting part, thereby allowing the outer circumferential surface of the first fitting part and the inner circumferential surface of the second fitting part to make stable contact with each other.

The first fitting part has a cylindrical outer circumferential surface and the second fitting part has a cylindrical inner circumferential surface, and the first fitting part further includes an unlocking recess extending circumferentially from the locking recess and having a depth reduced with increase in a distance from the locking recess. The unlocking recess allows the locked part to be automatically displaced radially outward from the lock position to the retraction position in accordance with a relative rotation of the first and second fitting parts to each other in a direction in which the locked part enters the unlocking recess in the lock position from the position where the locked part is fitted into the locking recess. This enables a user to remove the locked part from the locking recess to detach the hammering unit from the drill unit through a simple operation of rotating the first and second fitting parts relatively to each other.

As means for allowing the locked part to be smoothly fitted into the locking recess, the first fitting part preferably includes a guide surface inclined in such a direction that the guide surface is shifted radially outward of the first fitting part from a front end of the first fitting part toward the locking recess so as to displace the locked part gradually radially outward as the insertion of the first fitting part is advanced while keeping contact of the guide surface with the leading end of the locked part, the front end of the first fitting part being one of opposite ends of the first fitting part and being adjacent to the drill cutting blade part. The guide surface allows the locked part to be automatically and smoothly displaced from the lock position to the retraction position only with an operation of inserting the first fitting part into the second fitting part, requiring no special operation applied to the retainer part. In addition, the locked part is allowed to be automatically fitted into the locking recess by the elastic restoring force of the main part after having climbed over the guide surface.

It is preferable that the first fitting part further includes a guide groove extending from the front end of the first fitting part toward the locking recess in a direction parallel with an axial direction of the first fitting part, the guide groove having a bottom surface serving as the guide surface. The guide groove can facilitate positioning the second fitting part and the retainer unit relatively to the first fitting part circumferentially and surely guide the locked part of the retainer unit to the locking recess accompanying the insertion of the first fitting part into the second fitting part.

Regarding the retainer unit, it is preferably that the locked part has a larger diameter in a direction perpendicular to a direction in which the locked part protrudes from the main part than a diameter of the main part in a direction perpendicular to a direction in which the main part extends. In the locked part, the relatively large diameter of the locked part enables the locked part to have a high shear strength enough to resist against a shear force in a direction in parallel with a direction in which the second fitting part is removed from the first fitting part, while the relatively small diameter of the main part in a lateral cross section thereof enables the main part to be elastically deformed easily to displace the locked part.

Specifically, the retainer unit preferably includes a main-part member having a bent-rod shape to form the main part and an locked-part member forming the locked part and having a diameter larger than the diameter of the main-part member, the main-part member and the locked-part member being fitted with each other so as to allow an elastic restoring force of the main-part member to be transmitted to the locked-part member. The combination of the main member and the locked-part member in the retainer unit enables the main part and the locked part to have respective diameters different from each other.

Regarding this mode, it is preferable that the locked-part member has a fitting groove extending in a circumferential direction of the second fitting part to allow a portion of the main-part member to be fitted into the fitting groove, the portion extending in the circumferential direction. Alternatively, it is also permissible that the main-part member further includes a main portion forming the main part and a protruding portion joined to the main portion, the protruding portion protruding radially inward from the main portion, and the locked-part member has a cylindrical shape enclosing an insertion hole allowing the protruding portion to be inserted into the insertion hole, the protruding portion inserted into the insertion hole and the locked-part member constituting the locked part.

The retainer unit, including the two members independent from each other, namely, he main-part member and the locked-part member, allows the main-part member and the locked-part member to be made of a first material and a second material different from the first material, respectively. This allows the first material to have a lower elastic coefficient than the second material and the second material to have a higher shear strength than the first material, thereby facilitating the establishment of both of encouraged displacement of the locked part owing the elastic deformation in the main part and a secured sufficient shear strength of the locked part.

### Brief Description of Drawings

FIG. 1 is a cross sectional front view partly showing a state that a hammering unit is attached on a drill bit in an anchor setting tool according to a first embodiment of the present invention.
FIG 2 shows a cross section taken along the line II-II of FIG. 1.
FIG 3 is a plan view of the drill bit.
FIG 4 is a front view of the drill bit.
FIG. 5 shows a cross section taken along the line V-V of FIG. 4.
FIG. 6 is a cross sectional front view of the hammering unit.
FIG. 7 shows a cross section taken along the line VII-VII of FIG. 6
FIG. 8 is a cross sectional front view showing a guide surface guiding a locked part with insertion of a first fitting part of the drill bit into a second fitting part of the hammering unit.
FIG. 9 is a cross sectional view showing a state of FIG. 8 in the cross section taken along the line VII-VII of FIG. 6.
FIG. 10 is a cross sectional front view showing the locked part having been fitted into an locking recess with completion of the insertion of the first fitting part into the second fitting part.
FIG. 11 is a front view showing a drilling operation performed by the drill bit.
FIG. 12 is a front view showing an anchor hammering operation performed by the hammering unit.
FIG. 13 is a cross sectional view showing disengagement of the locked part from the locking recess involved by a relative rotation of the first fitting part to the second fitting part in the cross section taken along the line VII-VII of FIG. 6.
FIG. 14 is a perspective view of a retainer unit in a second embodiment of the present invention.
FIG. 15 is a cross sectional front view showing a second fitting part retained on a first fitting part in an anchor setting tool according to the second embodiment.
FIG. 16 shows a cross section taken along the line XVI-XVI of FIG. 15.
FIG. 17 is a cross sectional view showing disengagement of a locked part from an locking recess involved by a relative rotation of the first fitting part to the second fitting part in the cross section taken along the line XVI-XVI of FIG. 15.
FIG. 18 is a perspective view of a retainer unit in a third embodiment of the present invention.
FIG. 19 is a cross sectional front view showing a second fitting part retained on a first fitting part in an anchor setting tool according to the third embodiment.
FIG. 20 shows a cross section taken along the line XX-XX of FIG. 19.
FIG. 21 is a cross sectional view showing disengagement of a locked part from an locking recess involved by a relative rotation of the first fitting part to the second fitting part in the cross section taken along the line XX-XX of FIG. 19.
FIG. 22 is a cross sectional plan view partly showing an locked-part member fitted into a recess opposite to an unlocking recess in the anchor setting tool according to the second embodiment.
FIG. 23 is a cross sectional plan view partly showing a modified shape of the recess shown in FIG. 22.
FIG. 24 is a cross sectional front view partly showing a hammering unit attached on a drill bit in an anchor setting tool according to a fourth embodiment of the present invention.
FIG. 25 shows a cross section taken along the line 25-25 of FIG. 24.
FIG. 26 is a plan view of the drill bit shown in FIG. 24.
FIG. 27 is a front view of the drill bit shown in FIG. 24.
FIG. 28 is a bottom view of the drill bit shown in FIG. 24.
FIG. 29 shows a cross section taken along the line 29-29 of FIG. 27.
FIG. 30 is a cross sectional view showing a locked part progresses having entered a reception recess of the drill bit in the cross section taken along the line 25-25 of FIG. 24.
FIG. 31 is a cross sectional view showing a course of movement of the locked part from the reception recess toward the locking recess involved by a relative rotation of a first fitting part to a second fitting part in the cross section taken along the line 25-25 of FIG. 24.
FIG. 32 is a cross sectional view showing disengagement of the locked part from the locking recess involved by the relative rotation of the first fitting part to the second fitting part in the cross section taken along the line 25-25 of FIG. 24.
FIG. 33 is a cross sectional front view partly showing a conventional anchor setting tool where a hammering unit has been attached on a drill bit.

### Description of Embodiments

Hereinafter, preferred embodiments of the present invention will be described with reference to the accompanying drawings.

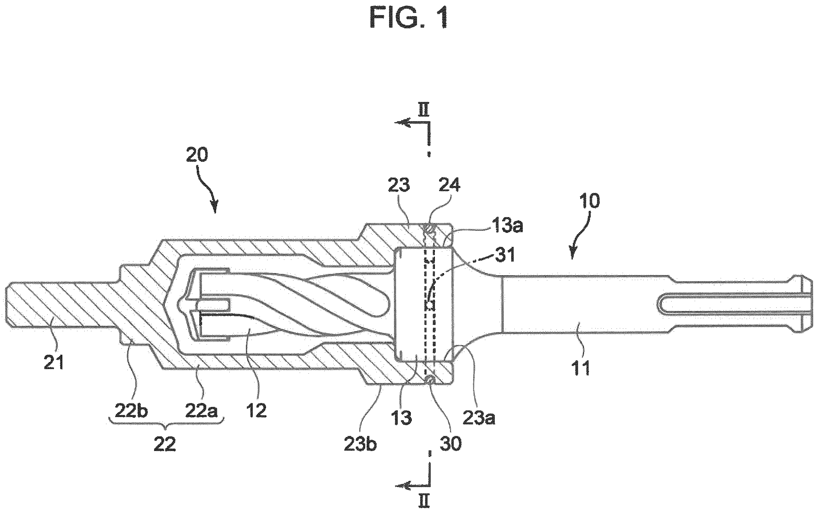

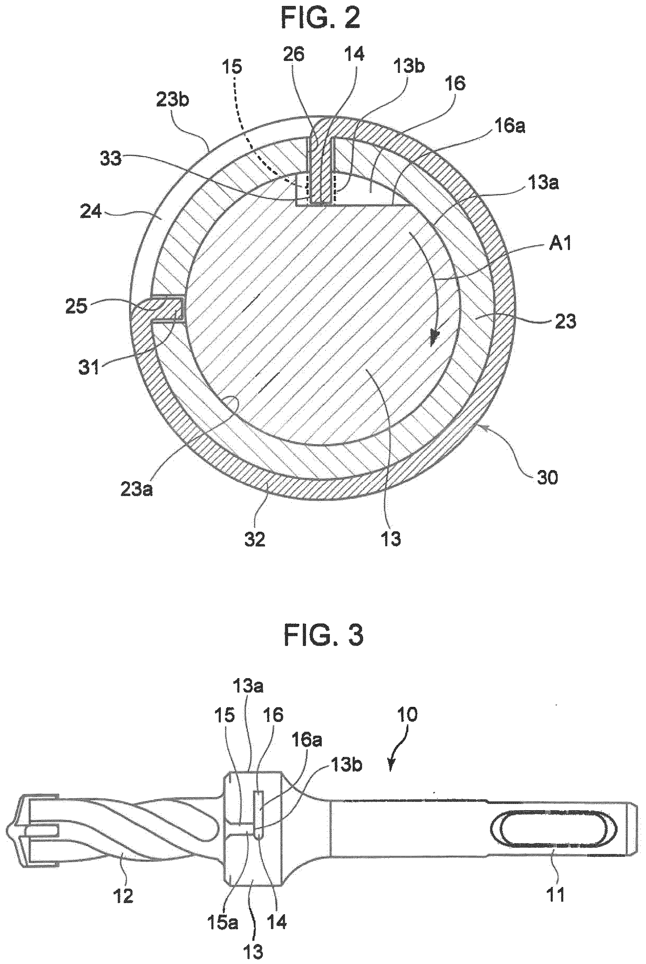

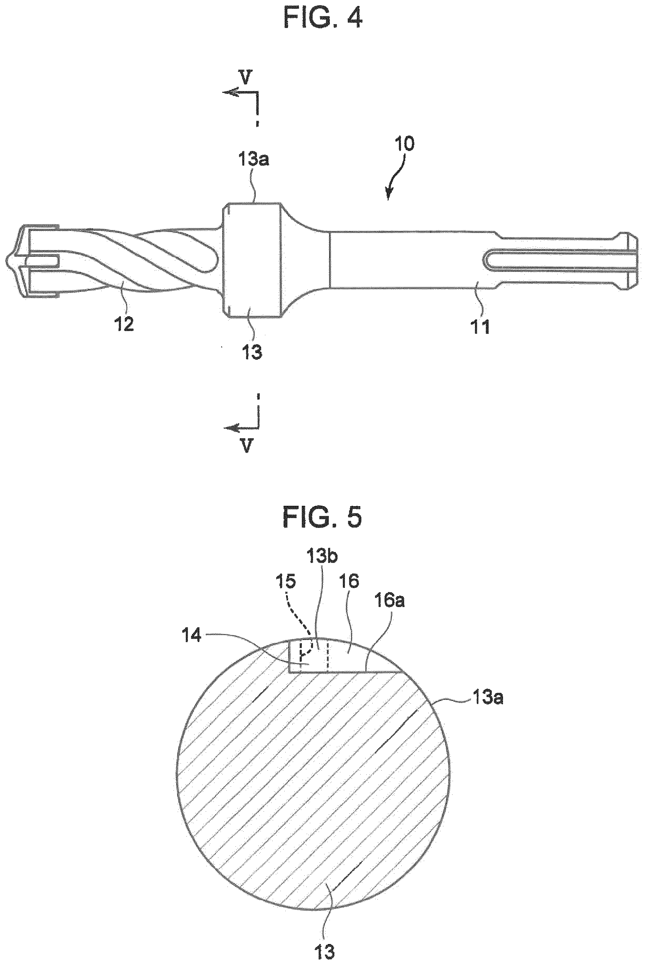

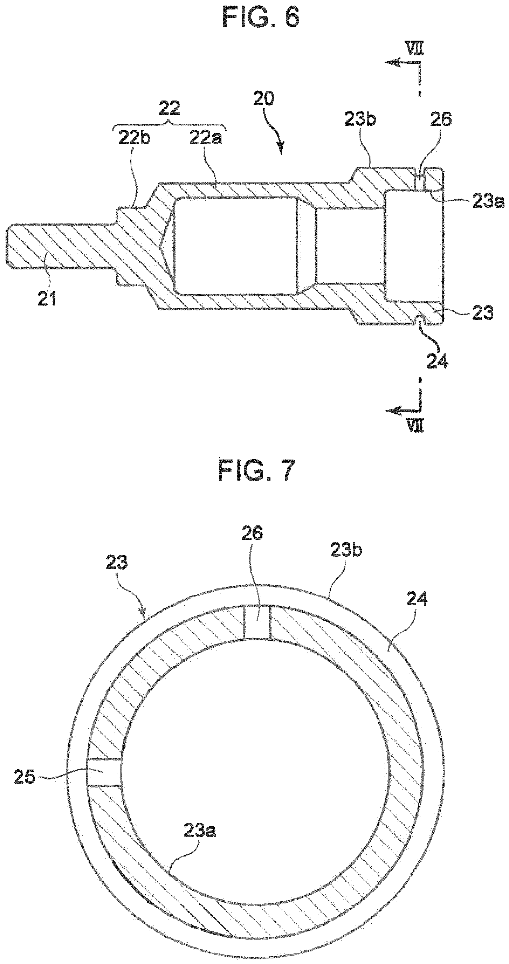

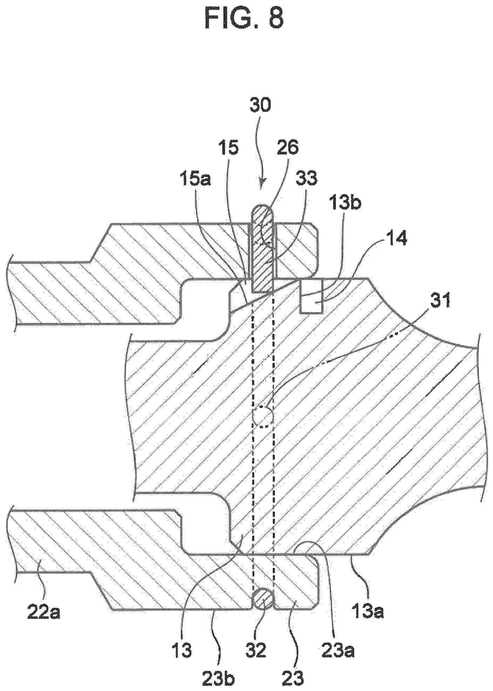

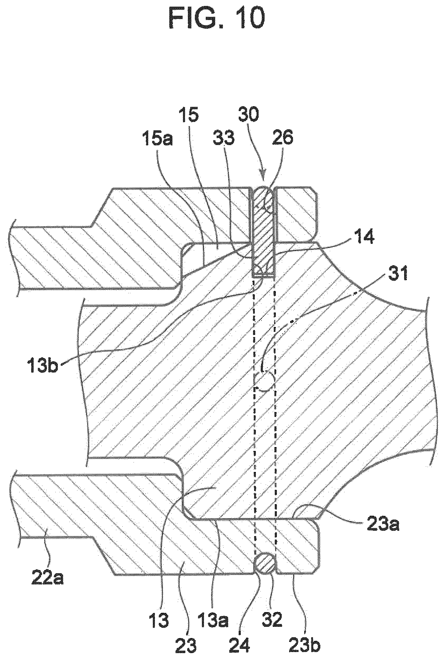

FIGS. 1 and 2 show an anchor setting tool according to a first embodiment of the present invention. The anchor setting tool includes a drill bit 10 shown in also FIGS. 3 to 5, a hammering unit 20 shown in also FIGS. 6 and 7, and a retainer unit 30 shown in also FIGS. 8 to 10.

The drill bit 10 serves as a drill unit adapted to drill an anchor hole in an anchor setting place when being driven to be rotated, integrally including a shank 11, a drill cutting blade part 12, and a first fitting part 13.

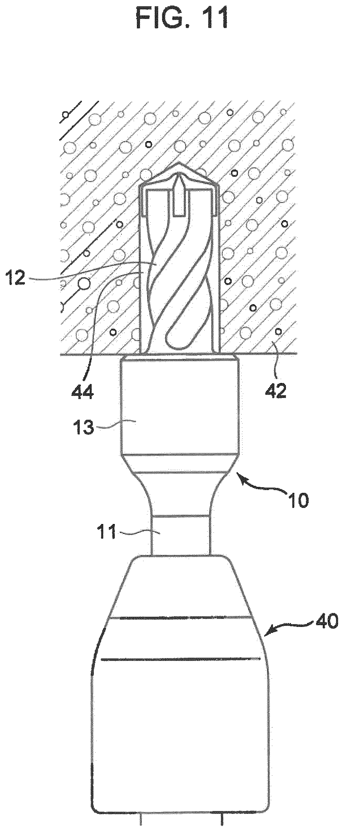

The shank 11 serves as a held part adapted to be held by a tool driving device 40 shown in FIG. 11. The tool driving device 40 to hold the shank 11 is an electric tool device for driving the drill bit 10 to rotate and axially reciprocate it; the tool driving device 40 may be, for example, a driving device called as a hammer drill which drives the drill bit 10 to rotate and axially reciprocate it at the same time, or a combination of a first driving device for rotating and a second driving device for reciprocating. Thus, the held part of the present invention can be either one adapted to be held by a single driving device capable of driving to rotate and reciprocate the drill unit simultaneously or one adapted to be held by a first driving device for rotating and a second driving device for reciprocating selectively in accordance with a working operation.

The drill cutting blade part 12 is coaxial with the shank 11, having a drill shape capable of drilling an anchor hole in an anchor setting place when being driven to be rotated.

The first fitting part 13 is located between the shank 11 and the drill cutting blade part 12, thus forming an axially intermediate portion of the drill bit 10. The first fitting part 13 has a substantially columnar shape having a cylindrical outer circumferential surface 13a, having a larger outer diameter than that of either of the shank 11 and the drill cutting blade part 12.

The drill unit according to the present invention should not be limited to an integral type such as the drill bit 10, that is, a member which is formed by cutting off a single shaft member into a specified form. For example, the first fitting part according to the invention may be formed of an annular member other than a main drill body including the shank 11 and the drill cutting blade part 12, the annular member being disposed around an intermediate portion of the main drill body.

The hammering unit 20 is formed of a member capable of hammering the anchor into the anchor hole drilled by the drill bit 10 by being driven to be axially reciprocated while being detachably attached on the drill bit 10. The hammering unit 20 integrally including a hammering part 21, a drill cover part 22, and a second fitting part 23.

The drill cover part 22 has a hollow shape capable of covering the drill cutting blade part 12, specifically, having a closed front end and an opened rear end. More specifically, the drill cover part 22 has a cap shape which integrally includes a peripheral wall 22a capable of being located radially outward of the drill cutting blade part 12 to enclose the same and an end wall 22b closing one of opposite opened ends, namely, a front end, of the peripheral wall 22a.

The hammering part 21 protrudes forward beyond the end wall 22b, having a rod shape capable of applying repetitive strikes to the anchor when being driven to be axially reciprocated. The hammering part 21 preferably has a rod shape capable of extending along a central axis of the drill bit 10 when the hammering unit 20 is attached on the drill bit 10.

The second fitting part 23 is joined to a rear end of the peripheral wall 22a of the drill cover part 22 and has a cylindrical shape allowing the first fitting part 13 to be fitted into the second fitting part 23 from a side opposite to the drill cover part 22 (that is, a rear side, i.e., the right side in FIG. 1). The second fitting part 23 according to the embodiment includes an inner circumferential surface 23a having a cylindrical shape capable of making close contact with the outer circumferential surface 13a of the first fitting part 13 with little gap and an outer circumferential surface 23b having a cylindrical shape with an outer diameter larger than the diameter of the inner circumferential surface 23a. The outer circumferential surface 23b is formed with a circumferential groove 24 extending circumferentially to hold the retainer unit 30.

The retainer unit 30 is attached to the hammering unit 20 to be engaged with the drill bit 10 so as to enable the hammering unit 20 to be retained on the drill bit 10 while permitting the hammering unit 20 to be detached from the drill bit 10. The retainer unit 30 integrally includes a fixed part 31, a main part 32, and a locked part 33.

The main part 32 has a shape capable of being fitted into the circumferential groove 24 while extending in a circumferential direction of the second fitting part 23, the shape including opposite ends apart from each other; specifically, the main part 32 is a circularly arcuate. The arc formed by the main part 32 preferably has a central angle exceeding 180°, for example, a central angle of around 270° as shown in FIG. 2, preferably. This shape enables the main part 32 to be stably attached to the second fitting part 23. The specific shape of the main part 32, however, should not be limited thereto, as described later.

The fixed part 31 has a shape protruding inward from one of the opposite ends of the main part 32, with a protrusion size equal to or less than a radial thickness of the second fitting part 23, preferably close to the radial thickness. Similarly, the locked part 33 has a shape protruding inward from the other end of the main part 32, but with a protrusion size greater than the radial thickness of the second fitting part 23. The retainer unit 30 including the respective parts 31, 32 and 33 can be formed, for example, by bending a wire rod made of a metal material having an appropriate spring constant (generally, steel material adaptable to a C-ring or the like).

The second fitting part 23 is formed with a fixing hole 25 and an locked-part hole 26 for the fixed part 31 and the locked part 33, respectively, each of the holes 25 and 26 penetrating the second fitting part 23 radially. The fixed part 31 is fitted into the fixing hole 25 from outside to be fixed to the second fitting part 23. The locked part 33 is inserted into the locked-part hole 26 from the outside to keep a leading end of the locked part 33 protrude inside the second fitting part 23 beyond the inner circumferential surface 23a.

A way of fixing the fixed part 31 to the second fitting part 23 is not limited to the above-described insertion of the fixed part 31 into the fixing hole 25. The fixing may be performed, for example, through welding or calking.

The outer circumferential surface 13a of the first fitting part 13 is formed with an locking recess 14, a guide groove 15, and an unlock groove 16 serving as an unlocking recess.

The locking recess 14 has a depth enough to receive the leading end of the locked part 33 inserted into the locked-part hole 26, the leading end protruding inward beyond the inner circumferential surface 23a. The first fitting part 13 has a wall defining the locking recess 14, the wall including a locking portion 13b located on the front side of the locked part 33, i.e., located closer to the drill cutting blade part 12 than the locked part 33. The locking portion 13b is a portion adapted to make axial contact with the protruding portion of the locked part 33 to prevent the second fitting part 23 from being removed forward from the first fitting part 13.

The main part 32 of the retainer unit 30 is elastically deformable in such a diameter increasing direction as to increase the diameter of the main part 32 while keeping the fixed part 31 fixed to the second fitting part 23. The elastic deformation allows the locked part 33 to be displaced radially outward from a lock position to an unlock position, namely, a retraction position, as shown in FIG. 2. In the lock position, the leading end (i.e., lower end in FIG. 2) of the locked part 33 protrudes radially inward beyond the circumferential surface 23a of the second fitting part 23 to be fitted into the locking recess 14. In the unlock position, the leading end of the locked part 33 is retracted radially outward away from the locking recess 14 to permit the first fitting part 13 and the second fitting part 23 to make relative movement to each other. Between an inner wall enclosing the locked-part hole 26 and an outer circumferential surface of the locked part 33, a clearance is given enough to permit the locked part 33 to be displaced radially outward in the locked-part hole 26 involved by the elastic deformation in the main part 32 in the diameter increasing direction.

The guide groove 15 serves as means for allowing the locked part 33 to be smoothly fitted into the locking recess 14 in accordance with the insertion of the first fitting part 13 into the second fitting part 23. The guide groove 15 extends from a front end of the first fitting part 13 toward the locking recess 14 in a direction in parallel with the axial direction to guide the locked part 33 in the axial direction, the front end being one of axial opposite ends of the first fitting part 13 and being adjacent to the drill cutting blade part 12.

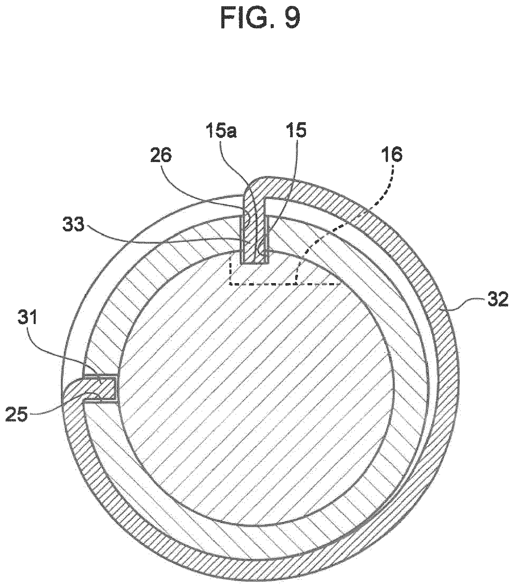

The guide groove 15 has a bottom surface serving as a guide surface 15a shown in also FIGS. 8 and 9. The guide surface 15a is inclined in such a direction that the guide surface 15a is shifted radially outward of the first fitting part 13 from a front end of the first fitting part 13 toward the locking recess 14 (that is, inclined to the front end, i.e., inclined to the left side in FIG. 8) so as to displace the locked part 33 gradually radially outward as the insertion of the first fitting part 13 is advanced while keeping contact of the guide surface 15a with the leading end of the locked part 33.

A guide surface to displace the locked part 33 radially outward with the insertion should not be limited to the bottom surface of the guide groove 15. The guide surface may be, for example, a surface extending over the entire circumference of the first fitting part 13 (that is, a surface of truncated-cone-shape formed by chamfering a forward peripheral end of the first fitting part 13). However, the guide surface 15a formed by the bottom surface of the guide groove 15 can guide the locked part 33 to the locking recess 14 more surely, while facilitating positioning the locked part 33 circumferentially.

The unlocking groove 16 serves as an unlocking recess which allows the locked part 33 to be smoothly disengaged radially outward from the locking recess 14, having a depth reduced with increase in a distance from the locking recess 14. Specifically, the unlocking groove 16 has a bottom surface serving as an unlocking guide surface 16a which displaces the locked part 33 gradually radially outward, in accordance with a relative rotation of the first and second fitting parts 13, 23 to each other in a direction in which the locked part 33 enters the unlocking groove 16 from the locking recess 14, while keeping contact of the unlocking guide surface 16a with the leading end of the locked part 33. In the embodiment, the unlocking guide surface 16a is planar.

A direction of extension of the unlocking groove 16 from the locking recess 14 can be appropriately selected. However, for the case where the drill bit 10 is driven not only to e axially reciprocated but also to be rotated during the hammer operation by the hammering unit 20, the direction is preferably same as a direction of the rotational drive as denoted by the arrow A1 in FIG. 2. This allows the locked part 33 to be surely prevented from entering the unlocking groove 16 due to the rotation of the drill bit 10 during the anchor hammering operation.

Next will be described about the way of use of the anchor setting tool and the action thereof. The anchor setting tool can be used, for example, as follows.

### 1) Drilling anchor hole

Firstly performed is drilling an anchor hole 44 in a building component as a target of anchor setting, for example, a concrete ceiling 42 shown in FIG. 11. The drilling is done by use of the drill bit 10. Specifically, the drill bit 10 is driven at least to be rotated (preferably, to be rotated and reciprocated simultaneously) with use of the tool driving device 40 in a state where the shank 11 of the drill bit 10 is held by the tool driving device 40 and a hammering unit 20 is detached from the drill bit 10 to expose the drill cutting blade part 12. The drill cutting blade part 12 of the thus driven drill bit 10 is pressed against the ceiling 42 to thereby drill the anchor hole 44 in the ceiling 42.

### 2) Attachment of hammering unit on drill bit

After the drilling, the hammering unit 20 is attached on the drill bit 10 in order to perform anchor hammering with use of the hammering unit 20. The attachment can be performed by fitting the first fitting part 13 of the drill bit 10 axially into the second fitting part 23 of the hammering unit 20 in an attitude where the circumferential position of the locked part 33 of the retainer unit 30 attached to the hammering unit 20 is coincident with the circumferential position of the guide groove 15 formed in the first fitting part 13 of the drill bit 10.

Specifically, the insertion of the first fitting part 13 into the second fitting part 23 causes the guide groove 15 to guide the locked part 33 to direct the locked part 33 from the front end of the first fitting part 13 to the locking recess 14 and further the bottom surface of the guide groove 15, namely, the guide surface 15a, displaces the locked part 33 of the retainer unit 30, as shown in FIGS. 8 and 9, gradually radially outward from the lock position (in which the leading end of the locked part 33 greatly protruding inward beyond the inner circumferential surface 23a of the second fitting part 23) to the unlock position (retraction position) while keeping contact of the guide surface 15a with the leading end of the locked part 33 and involving elastic deformation in the main part 32 of the retainer unit 30. Upon completion of the insertion, the locked part 33 reaches the locking recess 14, automatically restoring to the lock position by the elastic restoring force of the main part 32 to thereby fit the leading end of the locked part 33 into the locking recess 14.

This brings the protruding portion of the locked part 33 protruding inward beyond the inner circumferential surface 23a of the second fitting part 23 into axial contact with the locking portion 13b which is formed by the wall defining the front end of the locking recess 14, thereby surely preventing the second fitting part 23 from being removed forward from the first fitting part 13, that is, preventing the hammering unit 20 from being detached from the drill bit 10. The attachment of the hammering unit 20 on the drill bit 10 is thus completed.

### 3) Hammering anchor

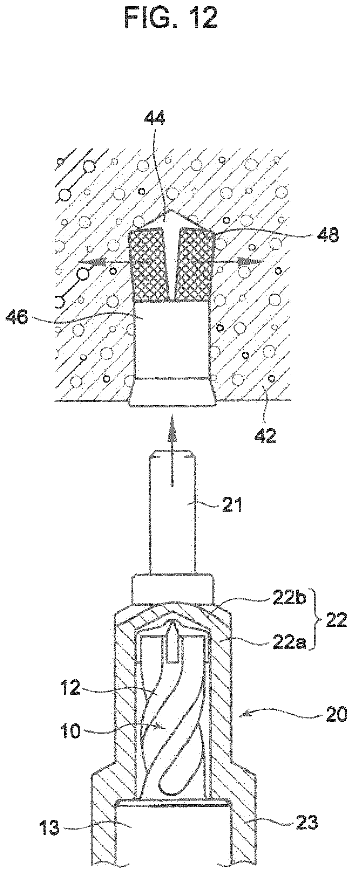

With use of the hammering unit 20, performed is hammering an anchor 46 into the anchor hole 44 as shown in FIG. 12. The anchor 46 accommodates a not-graphically-shown core and includes a plurality of wings 48 adapted to be pressed outward by the core shifting in a hammering direction so as to be expanded. Hence, applying strikes in the hammering direction to the core in the anchor 46 disposed in the bottom of the anchor hole 44 causes the wings 48 to be expanded to bite into the ceiling 42; thus, the anchor 46 can be fixed in the anchor hole 44.

The application of strikes to the core can be performed by pressing the hammering part 21 of the hammering unit 20 against the core while axially reciprocating the drill bit 10 and the hammering unit 20 attached thereon with use of the tool driving device 40. Although this causes repetitive axial hammering counterforces to act on the hammering unit 20 from the anchor 46 at a high speed, the engagement of the hammering unit 20 with the drill bit 10 is reliably kept regardless of the hammering counterforces unlike conventional arts, because the lock of the hammer unit 20 to the drill bit 10 is based on the axial contact of the leading end of the locked part 33 with the locking portion 13b located on the front side of the leading end, the leading end protruding inward beyond the inner circumferential surface 23a of the second fitting part 23 through the locked-part hole 26 of the second fitting part 23 in the hammering unit 20, as described above. Besides, the axial contact of the locked part 33 with the locking portion 13b can prevent the falling also in a trial operation (i.e., idol hammering) performed prior to the above-described operation, in spite that the trial operation involves applying axial vibration to the drill bit 10 and the hammering unit 20 from the tool driving device 40 while the hammering unit 20 is not pressed to the anchor 46, which causes a risk of removal of the second fitting part 23 from the first fitting part 13 due to the vibration if the power for retaining the second fitting part 23 of the hammering unit 20 on the first fitting part 13 of the drill bit 10 is weak.

### 4) Detachment of hammering unit from drill bit

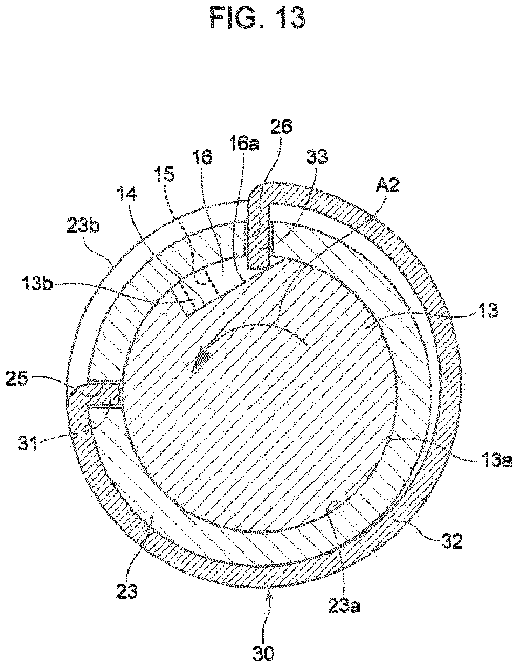

Following the completion of the anchor hammering, the hammering unit 20 can be easily detached from the drill bit 10 through a simple operation of rotating the drill bit 10 relatively to the hammering unit 20 in a direction denoted by the arrow A2 shown in FIG. 13, that is, rotating the hammering unit 20 relatively to the drill bit 10 in a direction opposite to the direction denoted by the arrow A2. The direction of the relative rotation denoted by the arrow A2 is a direction in which the locked part 33 enters the unlocking groove 16 from the locking recess 14 as shown in FIG. 13.

The unlocking groove 16, whose depth is reduced with increase in the distance from the locking recess 14 to the unlocking groove 16, that is, whose bottom surface serves as the unlocking guide surface 16a to displace the leading end of the locked part 33 gradually radially outward as the locked part 33 enters the unlocking groove 16, enables the locked part 33 to be easily displaced from the lock position to the unlock position, namely, the retraction position, only by the above relative rotation and with no additional operation applied to the retainer unit 30. Furthermore, the displacement of the locked part 33 to the retraction position immediately allows the second fitting part 23 to be removed axially from the first fitting part 13.

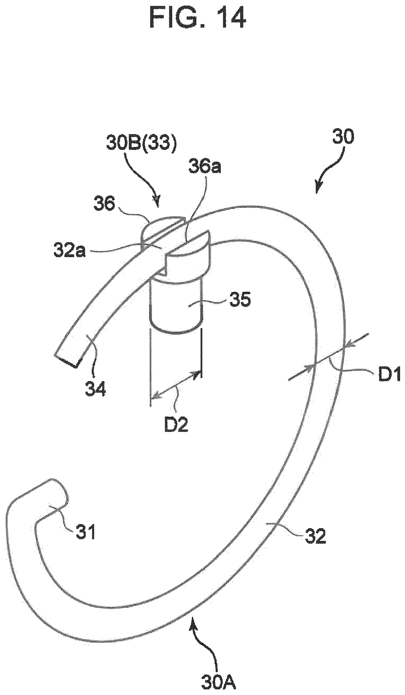

FIGS. 14 to 17 show an anchor setting tool according to a second embodiment of the present invention, the setting tool also including a retainer unit 30. However, differently from the retainer unit 30 in the first embodiment, which is formed of a single bent-rod-like member with a constant diameter longitudinally thereof and which integrally includes the fixed part 31, the main part 32, and the locked part 33, the retainer unit 30 in the second embodiment is composed of a main-part member 30A and an locked-part member 30B independent from the main-part member 30A.

Similarly to the retainer unit 30 in the first embodiment, the main-part member 30A has a bent-rod shape with a longitudinally constant first diameter D1; however, the main-part member 30A forms only a fixed part 31 and a main part 32 of the retainer unit 30. The main-part member 30A further includes an extension 34 extended from the locked part 33. The first diameter D1 is a diameter in a cross section of the main part 32 in the direction perpendicular to the longitudinal direction of the main part 32.

The locked-part member 30B has a substantially columnar shape and forms the locked part 33. Specifically, the locked-part member 30B integrally includes a main portion 35 having a columnar shape with a second diameter D2 larger than the first diameter D1 and a top portion 36 having a diameter larger than the second diameter D2. The second diameter D2 is a diameter of a lateral cross section of the locked part 33, the lateral cross section being a section perpendicular to a protrusion direction (i.e., a radially inward direction) in which the locked part 33 protrudes from the main part 32.

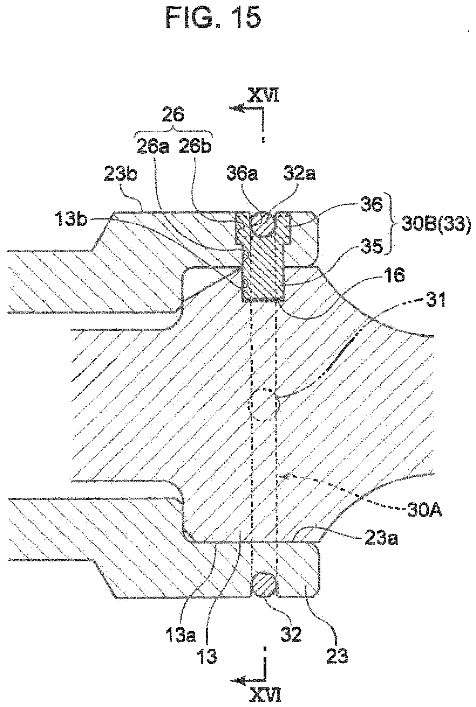

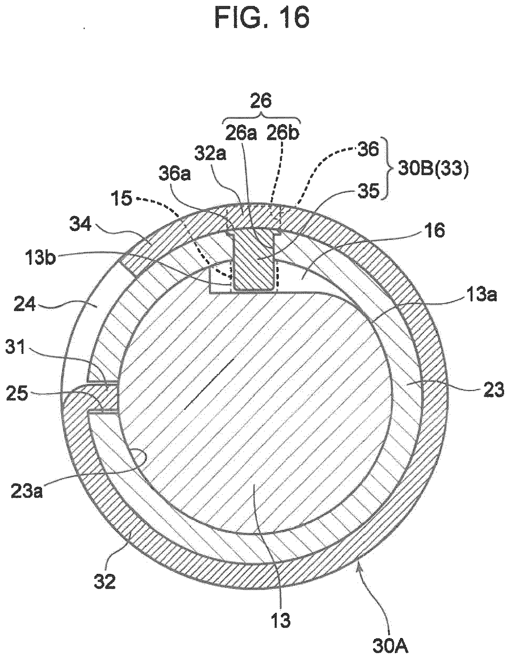

As shown in FIGS. 15 and 16, a second fitting part 23 is formed with an locked-part hole 26, which includes a small diameter hole 26a to receive the main part 35 of the locked-part member 30B and a large diameter hole 26b having a hole diameter larger than that of the small diameter hole 26a to receive the top part 36.

The top portion 36 is formed with a fitting groove 36a. The fitting groove 36a has a shape extending in a circumferential direction of the second fitting part 23 to allow a predetermined portion 32a of the main-part member 30A (adjacent to the extension 34) extending in the circumferential direction to be fitted into the fitting groove 36a. The fitting of the predetermined portion 32a into the groove 36a, that is, the fitting of the main-part member 30A and the locked-part member 30B with each other, allows the elastic restoring force of the main part 32 of the main-part member 30A to be transmitted to the locked-part member 30B as a radially inward force.

In the retainer unit 30 according to the second embodiment, the relatively small first diameter D1 given to the main part 32 facilitates elastic deformation in the main part 32 for displacement of the locked-part member 30B forming the locked part 33, while the larger second diameter D2 of the main part 35 of the locked-part member 30B forming the locked part 33 than the first diameter D1 gives the locked part 33 a high shear strength enough to resist against a sheer force in a direction in parallel with a direction in which the second fitting part 23 is removed from the first fitting part 13 (i.e., axial direction of the anchor setting tool).

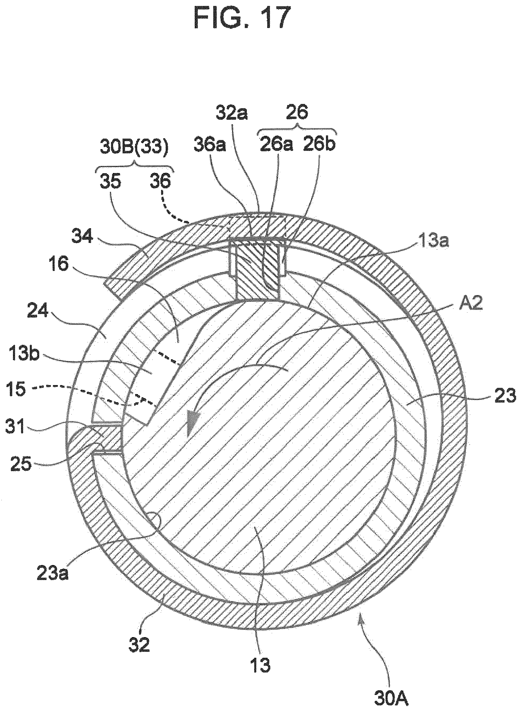

Also in the second embodiment, it is possible to detach the hammering unit 20 from the drill bit 10 by utilization of the elastic deformation in the main part 32 similarly to the first embodiment. Specifically, after the completion of the anchor hammering, the detachment can be easily performed by a simple operation of rotating the drill bit 10 relatively to the hammering unit 20 in a direction denoted by an arrow A2 shown in FIG. 17, that is, rotating the hammering unit 20 relatively to the drill bit 10 in an opposite direction to the direction denoted by the arrow A2.

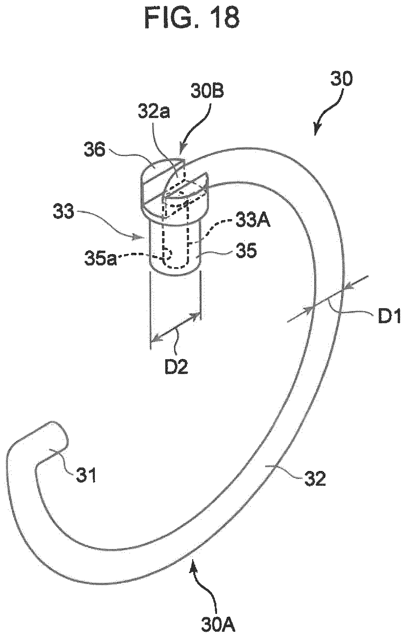

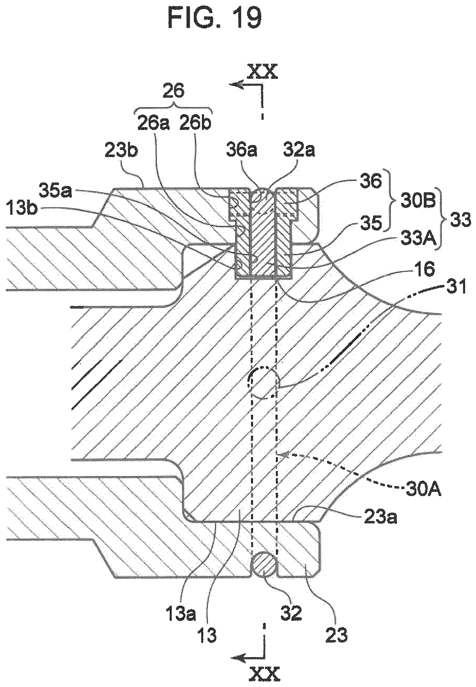

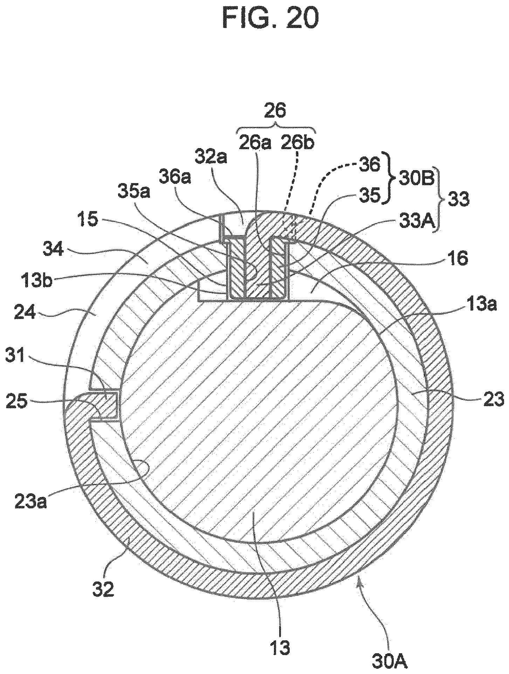

FIGS. 18 to 21 show an anchor setting tool according to a third embodiment of the present invention.

Similarly to the retainer unit 30 in the second embodiment, a retainer unit 30 in the third embodiment also includes a main-part member 30A and an locked-part member 30B independent from the main-part member 30A; however, the main-part member 30A not only forms a fixed part 31 and a main part 32 but also includes a protruding portion 33A in place of the extension 34 in the second embodiment. Similarly to the locked part 33 in the first embodiment, the protruding portion 33A protrudes radially inward from the terminal end of the main part 32.

The locked-part member 30B includes a top portion 36 formed with a fitting groove 36a similar to that of the second embodiment, and further includes a main portion 35 having a cylindrical shape enclosing an insertion hole 35a allowing the protruding portion 33A to be inserted to the insertion hole 35. The protruding portion 33A inserted into the insertion space 35a and the locked-part member 30B constitute the locked part 33 in cooperation with each other. In other words, the main part 35 having the cylindrical shape and a second diameter D2 is disposed around the protruding portion 33A having a first diameter D1 to provide the locked part 33 with an outer diameter substantially increased from the first diameter D1 to the second diameter D2.

Other structures than those described above in the third embodiment are equivalent to the structures in the second embodiment.

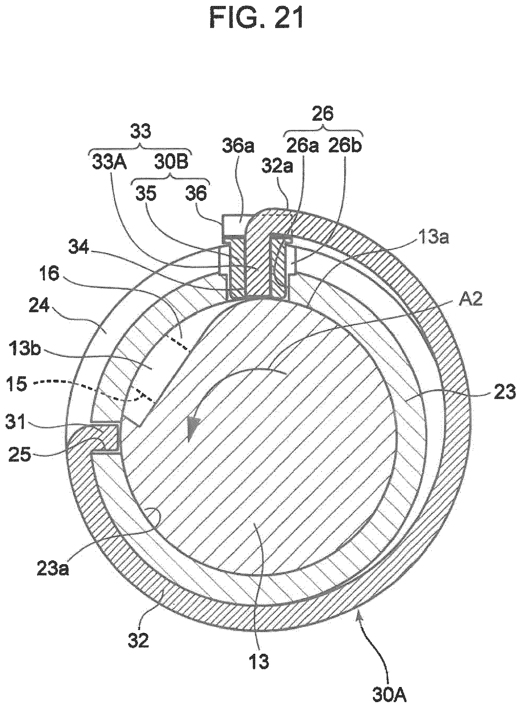

Also in the retainer unit 30 according to the third embodiment, the main part 32 can be given a relatively small first diameter D1 and the locked part 33 can be given a relatively large diameter D2. Besides, also the third embodiment makes it possible to detach a hammering unit 20 from a drill bit 10 by a simple operation of rotating the drill bit 10 relatively to the hammering unit 20 in a direction denoted by the arrow A2 shown in FIG. 21, that is, rotating the hammering unit 20 relatively to the drill bit 10 in an opposite direction to the direction denoted by the arrow A2.

The independency of the main-part member 30A and the locked-part member 30B from each other, which constitute the retainer unit 30, in the second and third embodiments allows the main-part member 30A and the locked-part member 30B to be made of respective materials different from each other, specifically, allow the main-part member 30A to be made of a first material and allow the locked-part member 30B to be made of a second material different from the first material.

Preferably, in this case, the first material has a lower elastic coefficient (i.e., more elastically deformable) than that of the second material, while the second material has a higher shear strength than that of the first material. This facilitates establishment of both encouraged displacement of the locked part 33 by elastic deformation in the main part 32 and a sufficiently high shear strength of the locked part 33. For example, it is appreciated to adopt spring steel for the first material and to adopt tool steel or precision-type special steel for the second material.

The main member 30A does not indispensably have to form the fixed part 31. For example, the fixed part 31 and the main part 32 may be formed of individual members, respectively.

In the first to the third embodiments, the locked part 33 is pressed against a wall of the first fitting part 13 by a torque acting on the drill bit 10 and a counterforce acting on the hammering unit 20, the wall defining one end of the locking recess 14, the one end being located opposite to the unlocking groove 16 (hereinafter, referred to as "counter-unlocking end"). The force pressing locked part 33 generates a shear load applied to the locked part 33.

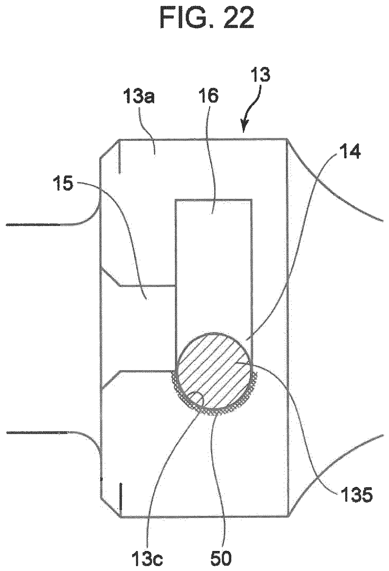

FIG. 22 illustrates the above-described situation about the second embodiment. In the example shown in FIG. 22, the wall 13c of the first fitting part 13 that defines the counter-unlocking end of the locking recess 14 (hereinafter, referred to as "counter-unlocking wall") is semicircular in a plan view. The locked part 33 (corresponding to the main part 35 of the locked-part member 30B in the second embodiment) is pressed against the counter-unlocking wall 13c entirely of the counter-unlocking wall 13c, i.e., over the entire mesh region 50 shown in FIG. 22. The shear load applied to the locked part 33 is therefore equivalent to a total of forces that the locked part 33 receives from the counter-unlocking wall 13c in the mesh region 50.

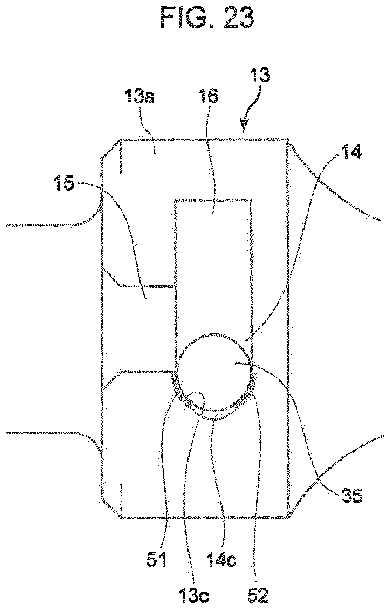

In contrast, as shown in FIG. 23, providing the counter-unlocking end with a bulged portion 14c in which the counter-unlocking wall 13c is partially apart from the locked part 33 makes it possible to cause the shear load to be applied from the counter-unlocking wall 13c to two mesh regions 51, 52 of the locked part 33 dispersedly as shown in FIG. 23, which allows the shear load to be remarkably effectively reduced. This advantageous effect is achievable also in the first and second embodiments, and further other embodiments including a fourth embodiment which will be described below.

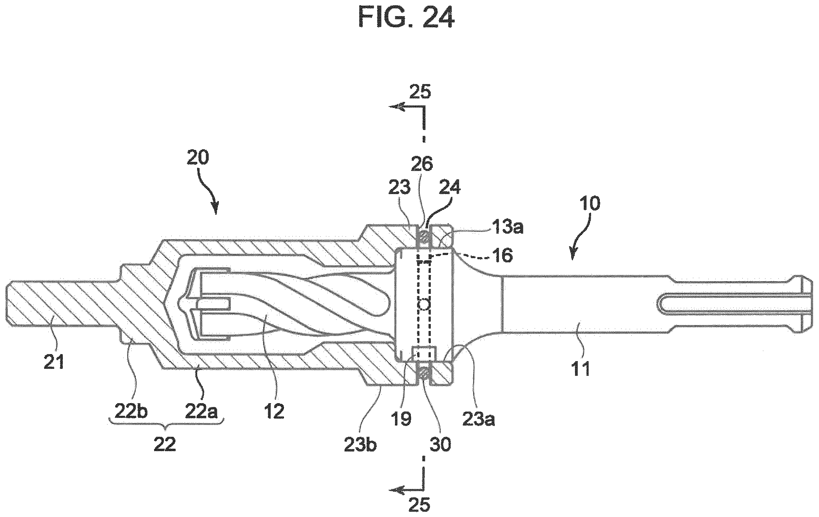

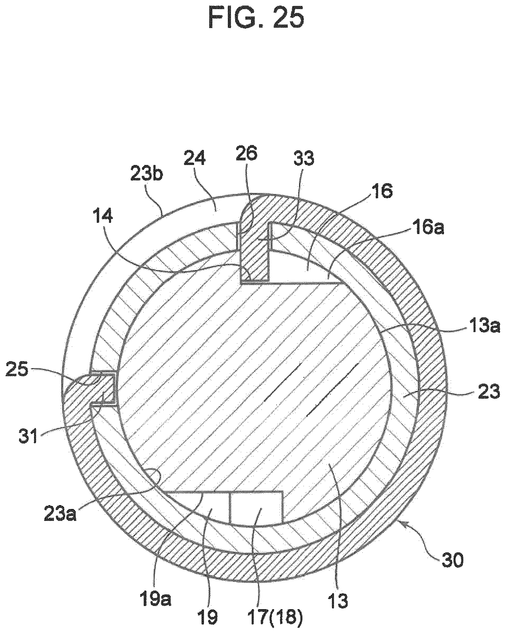

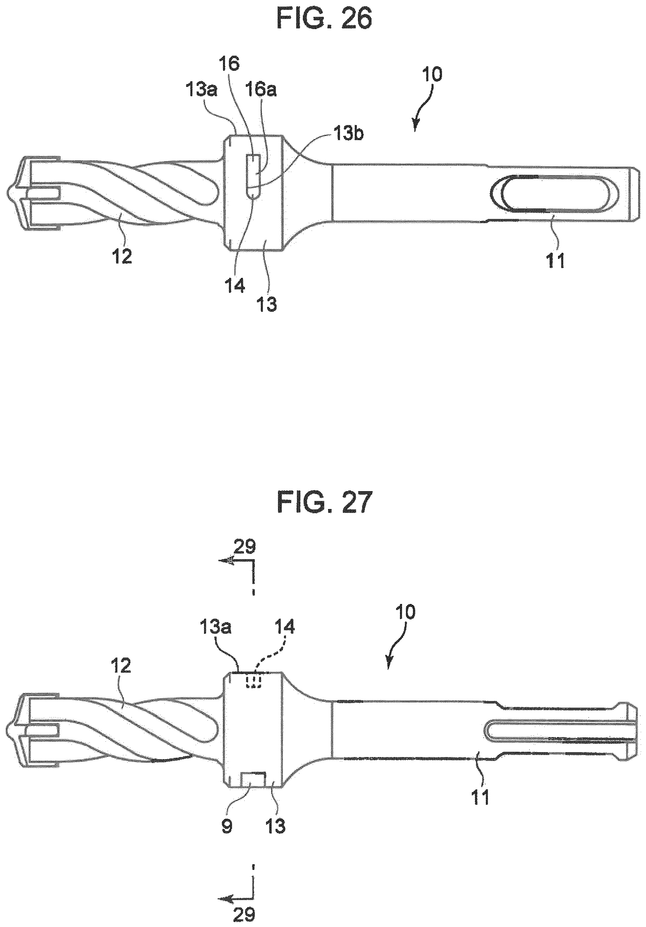

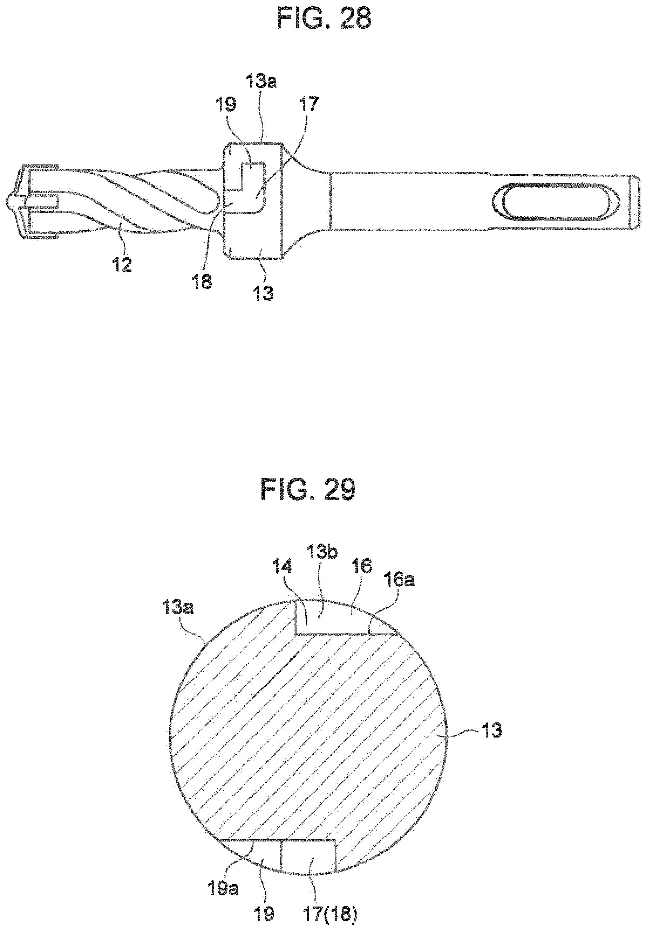

FIGS. 24 and 25 show an anchor setting tool according to a fourth embodiment of the present invention. The anchor setting tool also includes: a drill bit 10 shown in FIGS. 26 to 29; and a hammering unit 20 and a retainer unit 30 that have respective shapes and structures equal to that of the hammering unit 20 and the retainer unit 30 in the first embodiment, respectively. Similarly to the drill bit 10 in the first embodiment, the drill bit 10 in the fourth embodiment includes a shank 11, a drill cutting blade part 12, and a first fitting part 13, and the first fitting part 13 has an locking recess 14 and an unlocking groove 16 that are equal to those in the first embodiment; however, the first fitting part 13 is formed with a reception recess 17, a reception groove 18, and a removal reception groove 19 in place of the guide groove 15 in the first embodiment, as means for allowing the locked part 33 to be smoothly fitted into the locking recess 14. Hereinafter, the difference will be mainly described.

The reception recess 17 is independent from the locking recess 14, and formed at a position axially coincident with the locking recess 14 and circumferentially away from the locking recess 14 (at a position away from the locking recess 14 with an angle of 180°, in the embodiment). Similarly to the locking recess 14, the reception recess 17 has a depth enough to receive the locked part 33, that is, a depth equal to or larger than a size of the protrusion portion of the locked part 33, the protrusion portion protruding inward beyond the inner circumferential surface 23a of the second fitting part 23.

The reception groove 18 axially extends from a front end of a first fitting part 13 to the reception recess 17 so as to allow the locked part 33 to enter the reception recess 17 from the front end of the first fitting part 13. The reception groove 18 has a constant depth equivalent to the depth of the reception recess 17.

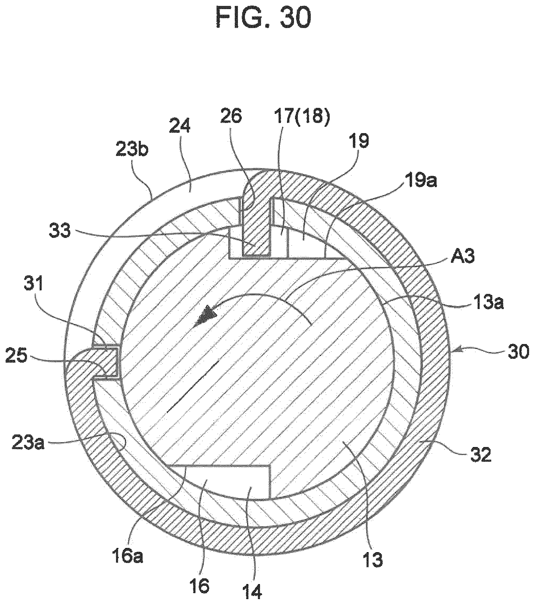

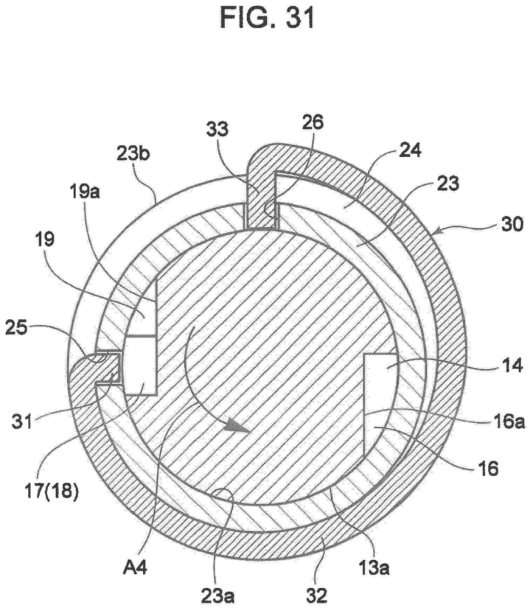

The removal reception groove 19 extends in a direction from the reception recess 17 as a start point to the locking recess 14 (a direction equal to the direction in which the unlocking groove 16 extends from the locking recess 14, in this embodiment, i.e., counterclockwise direction in FIGS. 25, 29, 31 and 32). Similarly to the unlocking groove 16, the removal reception groove 19 has a depth reduced with increase in distance from the reception recess 17. Thus, the removal reception groove 19 has a bottom surface serving as a removal reception guide surface 19a to displace the locked part 33 gradually radially outward in accordance with a rotation of the first and second fitting parts 13, 23 relative to each other in a direction in which the locked part 33 enters the removal reception groove 19 from the reception recess 17 (for example, a relative rotation of the first fitting part 13 to the second fitting part 23 in a direction denoted by arrows A3 shown in FIG. 30 and A4 shown in FIG. 31) while keeping contact of the removal reception guide surface 19a with the leading end of the locked part 33.

The anchor setting tool also allows a hammering unit 20 to be attached on a drill bit 10 by utilization of the recess and grooves 17 to 19. Specifically, a user can smoothly insert the first fitting part 13 into the second fitting part 23 so as to let the locked part 33 enter the reception recess 17 through the reception groove 18 as shown in FIG. 30. Moreover, by rotating the first and second fitting parts 13 and 23 thus fitted with each other relatively to each other in a direction in which the locked part 33 enters the removal reception groove 19 as shown in FIG. 31, the user can make the removal reception guide surface 19a that is the bottom surface of the removal reception groove 19 displace the locked part 33 gradually radially outward to finally remove the locked part 33 from the removal reception groove 19. Furthermore, by continuing the relative rotation to let the locked part 33 reach the locking recess 14 as shown in FIG. 25, the user can cause the locked part 33 to be fitted into the locking recess 14 by utilization of the elastic restoring force of the main part 32 of the retainer unit 30.

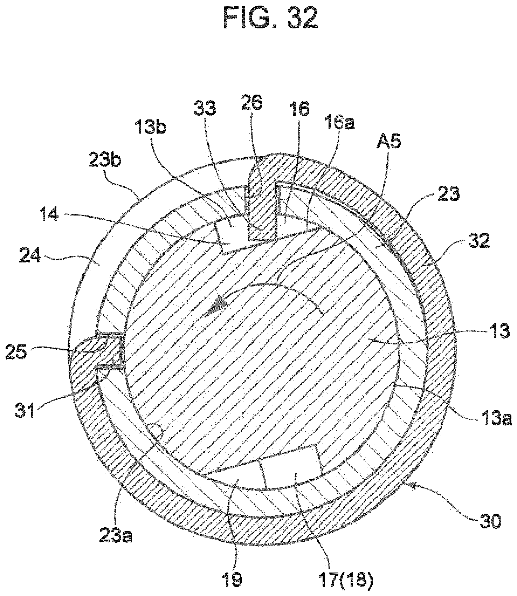

Similarly to the first embodiment, smooth detachment of the hammering unit 20 from the drill bit 10 can be performed by a further relative rotation of the first fitting part 13 and the second fitting part 23 to each other from the attached state, specifically, the further relative rotation in a direction in which the locked part 33 enter the unlocking groove 16 (i.e., by a relative rotation of the first conjunct potion 13 to the second fitting part 23 in a direction denoted by the arrow A5 shown in FIG. 32).

The present invention should not be limited to the above-described embodiments. For example, the present invention can adopt modifications described below.

### (A) Retainer unit

A main part of a retainer unit may have any shape extending along an outer circumferential surface of a second fitting part and capable of elastic deformation for radial displacement of the locked part 33y. For example, the main part may have a linear shape extending along the axial direction of the second fitting part. However, if having a shape like that of the main part 32 extending along the outer circumferential surface 23b of the second fitting part 23 circumferentially, the main part is advantageously able to be stably attached by utilization of its curvature and to displace radially outward the locked part 33 at a sufficient stroke through the radially outward elastic deformation of the main part itself. In addition, forming the second fitting part 23 with the circumferential groove 24 into which the main part 32 is fitted as described above allows the main part 32 to be attached more stably.

### (B) Recess (or groove)

The lock of the retainer unit by the first fitting unit does not necessarily require the guide groove 15, the unlocking groove 16, the reception recess 17, the reception groove 18, and the removal reception groove 19 in the first and fourth embodiments. In other words, it is possible to stably keep a hammering unit attached on a drill unit stably even without the above recesses or grooves. However, the guide groove 15, or the combination of the reception recess 17, the reception groove 18, and the removal reception groove 19, makes it possible to fit the locked part 33 smoothly into the locking recess 14 without any additional operation to the retainer unit 30 with use of a special jig, that is, to attach the hammering unit 20 on the drill bit 10 only by a simple operation. Besides, the unlocking groove 16 makes it possible to disengage the locked part 33 smoothly from the locking recess 14 without any additional operation to the retainer unit 30 with use of a special jig, that is, to detach the hammering unit 20 from the drill bit 10 only by a simple operation.

### (C) Locking portion

The locking portion according to the present invention should not be limited to a wall defining the locking recess 14 as described above. For example, the locking portion may be in the form of a step extending over the entire circumference of the first fitting part (i.e., a portion whose diameter is discontinuously decreased as a distance from a front end of the first fitting part increases toward the rear end of thereof). However, the structure including the locking recess 14 allows the locking portion 13b to be formed while a negative effect is suppressed on the shape of the outer circumferential surface 13a of the first fitting part 13, thereby allowing the outer circumferential surface 13a of the first fitting part 13 to be fitted with the inner circumferential surface 23a of the second fitting part 23 more stably.

## Claims

1. An anchor setting tool, comprising:
a drill unit (10) adapted to drill an anchor hole (44) in an anchor setting place (42) by being driven to be rotated;
a hammering unit (20) adapted to hammer an anchor into the anchor hole (44) by being driven to be axially reciprocated in a state of being detachably attached on the drill unit (10); and
a retainer unit (30) attached to the hammering unit (20), the retainer unit (30) being operable to be locked to the drill unit (10) to allow the hammering unit (20) to be retained on the drill unit (10) while allowing the hammering unit (20) to be detached from the drill unit (10), wherein:
the drill unit (10) includes a held part (112) adapted to be held by a tool driving device for drive the drill unit (10) to rotate and reciprocate the drill unit (10), a drill cutting blade part (114) having a shape to drill a hole in the anchor setting place (42) when being driven to be rotated, and a first fitting part (13) located between the held part (112) and the drill cutting blade part (114);
the hammering unit (20) includes a drill cover part (124) having a hollow shape to cover the drill cutting blade part (114), the drill cover part (124) having a closed front end and an opened rear end, a hammering part protruding beyond the front end of the drill cover part (124) and having a shape capable of applying repetitive strikes to the anchor when being driven to be reciprocated, and a second fitting part (23) joined to the rear end of the drill cover part (124), the second fitting part (23) having a cylindrical shape to allow the first fitting part (13) to be fitted into the second part;
the retainer unit (30) includes a fixed part (31) fixed to the second fitting part (23), a main part (32) extending from the fixed part (31) along an outer circumferential surface (23b) of the second fitting part (23), and a locked part (33) having a shape protruding radially inward from the main part (32) at a position away from the fixed part (31);
the second fitting part (23) has an locked-part hole (26) permitting the locked part (33) to radially pass through the second fitting part (23) such that a leading end of the locked part (33) protrudes inside the second fitting part (23);
the first fitting part (13) has a locking portion (13b) adapted to make axial contact with the leading end of the locked part (33) protruding inside the second fitting part (23) at a position closer to the drill cutting blade part (114) than the leading end of the locked part (33) to lock the second fitting part (23) so as to prevent the second fitting part (23) from being removed forward from the first fitting part (13);
the main part (32) of the retainer unit (30) has a shape capable of being brought into elastic deformation so as to increase a diameter of the main part (32) while the fixed part (31) is kept fixed, the elastic deformation allowing the locked part (33) to be displaced from a lock position in which the locked part (33) protrudes inside the second fitting part (23) through the locked-part hole (26) to be engaged with the locking portion (13b) to a retraction position in which the locked part (33) is retracted radially outward away from the locking portion (13b); and
the first fitting part (13) is formed with an locking recess (14) having a depth enough to allow the leading end of the locked part (33) in the lock position to be fitted into the locking recess (14), the first fitting part (13) including a wall defining the locking recess (14), the wall including a portion located closer to the drill cutting blade part (114) than the engagement part to serve as the locking portion (13b),
**characterized in that**
the first fitting part (13) has a cylindrical outer circumferential surface (13a) and the second fitting part (23) has a cylindrical inner circumferential surface, and the first fitting part (13) further includes an unlocking recess extending circumferentially from the locking recess (14) and having a depth reduced with increase in a distance from the locking recess (14).

2. An anchor setting tool according to claim 1, wherein the first fitting part (13) includes a guide surface inclined in such a direction that the guide surface is shifted radially outward of the first fitting part (13) from a front end of the first fitting part (13) toward the locking recess (14) so as to displace the locked part (33) gradually radially outward as the insertion of the first fitting part (13) is advanced while keeping contact of the guide surface with the leading end of the locked part (33), the front end of the first fitting part (13) being one of opposite ends of the first fitting part (13) and being adjacent to the drill cutting blade part (114).

3. An anchor setting tool according to claim 2, wherein the first fitting part (13) further includes a guide groove (15) extending from the front end of the first fitting part (13) toward the locking recess (14) in a direction parallel with an axial direction of the first fitting part (13), the guide groove (15) having a bottom surface serving as the guide surface.

4. An anchor setting tool according to any one of claims 1 to 3, wherein the locked part (33) has a larger diameter in a direction perpendicular to a direction in which the locked part (33) protrudes from the main part (32) than a diameter of the main part (32) in a direction perpendicular to a direction in which the main part (32) extends.

5. An anchor setting tool according to claim 4, wherein the retainer unit (30) includes a main-part member having a bent-rod shape to form the main part (32) and an locked-part member forming the locked part (33) and having a diameter larger than the diameter of the main-part member, the main-part member and the locked-part member being fitted with each other so as to allow an elastic restoring force of the main-part member to be transmitted to the locked-part member.

6. An anchor setting tool according to claim 5, wherein the locked-part member has a fitting groove extending in a circumferential direction of the second fitting part (23) to allow a portion of the main-part member to be fitted into the fitting groove, the portion extending in the circumferential direction.

7. An anchor setting tool according to claim 5, wherein the main-part member further includes a main portion forming the main part (32) and a protruding portion joined to the main portion, the protruding portion protruding radially inward from the main portion, and the locked-part member has a cylindrical shape enclosing an insertion hole allowing the protruding portion to be inserted into the insertion hole, the protruding portion inserted into the insertion hole and the locked-part member constituting the locked part (33).

8. An anchor setting tool according to any one of claims 4 to 7, wherein the main-part member is made of a first material, and the locked-part member is made of a second material different from the first material, the first material having a lower elastic coefficient than that of the second material, the second material having a higher shear strength than that of the first material.

## Patentansprüche

1. Ein Ankersetzwerkzeug, das Folgendes umfasst:
eine Bohreinheit (10), die zum Bohren eines Ankerlochs (44) an einer Ankersetzstelle (42) geeignet ist, indem sie zur Drehung angetrieben wird;
eine hämmernde bzw. Hammer-Einheit (20), die zum Einhämmern eines Ankers in das Ankerloch (44) geeignet ist, indem sie so angetrieben wird, dass sie sich axial hin- und herbewegt, wenn sie sich in einem Zustand befindet, in dem sie abnehmbar an der Bohreinheit (10) angebracht ist; und
eine Halteeinheit (30), die an der Hammereinheit (20) angebracht ist, wobei die Halteeinheit (30) dazu betreibbar ist, mit der Bohreinheit (10) verriegelt zu werden, um zu ermöglichen, dass die Hammereinheit (20) an der Bohreinheit (10) gehalten wird, sowie zu ermöglichen, dass die Bohreinheit (20) von der Bohreinheit (10) abgenommen wird, wobei:
die Bohreinheit (10) Folgendes beinhaltet: ein gehaltenes Teil (112), das dazu angepasst ist, von einer Werkzeugantriebsvorrichtung zum Antrieb der Bohreinheit (10) gehalten zu werden, um die Bohreinheit (10) zu drehen und hin- und her zu bewegen, ein Bohrerschneidklingenteil (114), das eine Form hat, um ein Loch an der Ankersetzstelle (42) zu bohren, wenn er zum Drehen angetrieben wird, und ein erstes Einpassteil *(fitting part)* (13), das zwischen dem gehaltenen Teil (112) und dem Bohrerschneidklingenteil (114) angeordnet ist;
die Hammereinheit (20) Folgendes beinhaltet: ein Bohrerabdeckteil (124), das eine hohle Form hat, um das Bohrerschneidklingenteil (114) abzudecken, wobei das Bohrerabdeckteil (124) ein geschlossenes vorderes Ende und ein offenes hinteres Ende hat, wobei ein hämmerndes bzw. Hammerteil über das vordere Ende des Bohrerabdeckteils (124) hinausragt und eine Form hat, die in der Lage ist, wiederholte Schläge auf den Anker auszuüben, wenn es angetrieben wird, um hin und her bewegt zu werden, und ein zweites Einpassteil (23), das mit dem hinteren Ende des Bohrerabdeckteils (124) verbunden ist, wobei das zweite Einpassteil (23) eine zylindrische Form hat, um das Einpassen bzw. Einsetzen des ersten Einpassteils (13) in das zweite Teil zu ermöglichen;
die Halteeinheit (30) Folgendes beinhaltet: ein festes Teil (31), das am zweiten Einpassteil (23) befestigt ist, ein Hauptteil (32), das sich vom festen Teil (31) entlang einer äußeren Umfangsfläche (23b) des zweiten Einpassteils (23) erstreckt, und ein verriegeltes Teil (33), das eine Form hat, die vom Hauptteil (32) ausgehend an einer vom festen Teil (31) entfernten Position radial nach innen vorsteht;
das zweite Einpassteil (23) ein Verriegelungsteil-Loch (26) aufweist, das es dem verriegelten Teil (33) ermöglicht, sich radial durch das zweite Einpassteil (23) zu erstrecken, sodass ein vorderes Ende des verriegelten Teils (33) in das Innere des zweiten Einpassteils (23) ragt;
das erste Einpassteil (13) einen Verriegelungsabschnitt (13b) aufweist, der so angepasst ist, dass er einen axialen Kontakt mit dem vorderen Ende des verriegelten Teils (33) herstellt, das in das Innere des zweiten Einpassteils (23) an einer Position vorsteht, die näher am Bohrerschneidklingenteil (114) liegt als das vordere Ende des verriegelten Teils (33), um das zweite Einpassteil (23) zu verriegeln, sodass verhindert werden kann, dass das zweite Einpassteil (23) nach vorne aus dem ersten Einpassteil (13) entfernt wird;
das Hauptteil (32) der Halteeinheit (30) eine Form hat, die in eine elastische Verformung gebracht werden kann, um einen Durchmesser des Hauptteils (32) zu vergrößern, während der feste Teil (31) fixiert gehalten wird, wobei die elastische Verformung es dem verriegelten Teil (33) ermöglicht, von einer Verriegelungsposition, in der das verriegelte Teil (33) durch das Verriegelungsteil-Loch (26) in das Innere des zweiten Einpassteils (23) ragt, um mit dem Verriegelungsabschnitt (13b) in Eingriff zu kommen, in eine Retraktionsposition verschoben zu werden, in der das verriegelte Teil (33) radial nach außen weg vom Verriegelungsabschnitt (13b) zurückgezogen ist; und wobei
das erste Einpassteil (13) mit einer Verriegelungsaussparung (14) ausgebildet ist, die eine Tiefe aufweist, die ausreicht, damit das vordere Ende des verriegelten Teils (33) in der Verriegelungsposition in die Verriegelungsaussparung (14) eingepasst werden kann, wobei das erste Einpassteil (13) eine Wand beinhaltet, die die Verriegelungsaussparung (14) definiert, wobei die Wand einen Abschnitt beinhaltet, der näher am Bohrerschneidklingenteil (114) angeordnet ist als das Eingriffsteil, um als Verriegelungsabschnitt (13b) zu dienen,
**dadurch gekennzeichnet, dass**
das erste Einpassteil (13) eine zylindrische äußere Umfangsfläche (13a) und das zweite Einpassteil (23) eine zylindrische innere Umfangsfläche aufweist, und das erste Einpassteil (13) ferner eine Entriegelungsaussparung beinhaltet, die sich von der Verriegelungsaussparung (14) aus in Umfangsrichtung erstreckt und eine Tiefe aufweist, die mit zunehmender Entfernung von der Verriegelungsaussparung (14) abnimmt.

2. Ein Ankersetzwerkzeug nach Anspruch 1, wobei das erste Einpassteil (13) eine Führungsfläche beinhaltet, die in einer solchen Richtung geneigt ist, dass die Führungsfläche von einem vorderen Ende des ersten Einpassteils (13) in Richtung der Verriegelungsausnehmung (14) radial nach außen des ersten Einpassteils (13) verschoben wird, um das verriegelte Teil (33) allmählich in dem Maß radial nach außen zu verlagern, wie das Einsetzen des ersten Einpassteils (13) vorangetrieben wird, während der Kontakt der Führungsfläche mit dem vorderen Ende des verriegelten Teils (33) erhalten bleibt, wobei das vordere Ende des ersten Einpassteils (13) eines von gegenüberliegenden Enden des ersten Einpassteils (13) ist und an das Bohrerschneidklingenteil (114) angrenzt.

3. Ein Ankersetzwerkzeug nach Anspruch 2, wobei das erste Einpassteil (13) ferner eine Führungsnut (15) beinhaltet, die sich vom vorderen Ende des ersten Einpassteils (13) ausgehend zur Verriegelungsausnehmung (14) hin in einer Richtung parallel zu einer axialen Richtung des ersten Einpassteils (13) erstreckt, wobei die Führungsnut (15) eine Bodenfläche aufweist, die als die Führungsfläche dient.

4. Ein Ankersetzwerkzeug nach irgendeinem der Ansprüche von 1 bis 3, wobei das verriegelte Teil (33) in einer Richtung senkrecht zu einer Richtung, in der das verriegelte Teil (33) aus dem Hauptteil (32) herausragt, einen größeren Durchmesser hat als ein Durchmesser des Hauptteils (32) in einer Richtung senkrecht zu einer Richtung, in der sich das Hauptteil (32) erstreckt.

5. Ein Ankersetzwerkzeug nach Anspruch 4, wobei die Halteeinheit (30) Folgendes beinhaltet: ein Hauptteil-Element, das zur Bildung des Hauptteils (32) die Form einer gebogenen Stange aufweist, und ein verriegeltes-Teil-Element, das das verriegelte Teil (33) bildet und einen Durchmesser aufweist, der größer ist als der Durchmesser des Hauptteil-Elements, wobei das Hauptteil-Element und das verriegelte-Teil-Element so aneinander gefügt sind, dass eine elastische Rückstellkraft des Hauptteil-Elements auf das verriegelte-Teil-Element übertragen werden kann.

6. Ein Ankersetzwerkzeug nach Anspruch 5, wobei das verriegelte-Teil-Element eine Passnut aufweist, die sich in einer Umfangsrichtung des zweiten Einpassteils (23) erstreckt, um zu ermöglichen, dass ein Abschnitt des Hauptteil-Elements in die Passnut eingepasst werden kann, wobei sich der Abschnitt in der Umfangsrichtung erstreckt.

7. Ein Ankersetzwerkzeug nach Anspruch 5, wobei das Hauptteil-Element ferner Folgendes beinhaltet: einen Hauptabschnitt, der das Hauptteil (32) bildet, und einen mit dem Hauptabschnitt verbundenen vorstehenden Abschnitt, wobei der vorstehende Abschnitt vom Hauptabschnitt ausgehend radial nach innen vorsteht, und wobei das verriegelte-Teil-Element eine zylindrische Form aufweist, die ein Einsetzloch umschließt, das es dem vorstehenden Abschnitt ermöglicht, in das Einsetzloch eingesetzt zu werden, wobei der vorstehende Abschnitt in das Einsetzloch eingesetzt wird und das verriegelte-Teil-Element das verriegelte Teil (33) bildet.

8. Ein Ankersetzwerkzeug nach irgendeinem der Ansprüche von 4 bis 7, wobei das Hauptteil-Element aus einem ersten Material hergestellt ist und das verriegelte-Teil-Element aus einem zweiten, vom ersten Material verschiedenen Material hergestellt ist, wobei das erste Material einen niedrigeren Elastizitätskoeffizienten als das zweite Material aufweist, wobei das zweite Material eine höhere Scherfestigkeit als das erste Material besitzt.

## Revendications

1. Un outil de pose d'ancrage, comprenant :
une unité de forage (10) adaptée pour percer un trou d'ancrage (44) dans un lieu de pose d'ancrage (42) en étant entraînée en rotation ;
une unité de martelage (20) adaptée pour marteler une ancre dans le trou d'ancrage (44) en étant entraînée pour effectuer un mouvement de va-et-vient axial dans un état où elle est fixée de manière détachable sur l'unité de forage (10) ; et
une unité de retenue (30) attachée à l'unité de martelage (20), l'unité de retenue (30) étant utilisable pour être verrouillée à l'unité de forage (10) pour permettre à l'unité de martelage (20) d'être retenue sur l'unité de forage (10) tout en permettant à l'unité de martelage (20) d'être détachée de l'unité de forage (10), sachant que
l'unité de forage (10) inclut une partie maintenue (112) adaptée pour être maintenue par un dispositif d'entraînement d'outil pour entraîner l'unité de forage (10) afin de faire tourner et d'effectuer un mouvement de va-et-vient de l'unité de forage (10), une partie de lame de coupe de foret (114) présentant une forme pour percer un trou dans le lieu de pose d'ancrage (42) lorsqu'elle est entraînée pour être tournée, et une première partie d'ajustement (13) située entre la partie maintenue (112) et la partie de lame de coupe de foret (114) ;
l'unité de martelage (20) inclut une partie de couverture de foret (124) présentant une forme creuse pour couvrir la partie de lame de coupe de foret (114), la partie de couverture de foret (124) ayant une extrémité avant fermée et une extrémité arrière ouverte, une partie de martelage faisant saillie au-delà de l'extrémité avant de la partie de couverture de foret (124) et présentant une forme capable d'appliquer des coups répétitifs à l'ancrage lorsqu'elle est entraînée pour effectuer un mouvement de va-et-vient, et une deuxième partie d'ajustement (23) étant jointe à l'extrémité arrière de la partie de couverture de foret (124), la deuxième partie d'ajustement (23) présentant une forme cylindrique pour permettre à la première partie d'ajustement (13) d'être ajustée dans la deuxième partie ;
l'unité de retenue (30) inclut une partie fixe (31) fixée à la deuxième partie d'ajustement (23), une partie principale (32) s'étendant depuis la partie fixe (31) le long d'une surface circonférentielle extérieure (23b) de la deuxième partie d'ajustement (23), et une partie verrouillée (33) présentant une forme qui fait saillie radialement vers l'intérieur depuis la partie principale (32) à une position éloignée de la partie fixe (31) ;
la deuxième partie d'ajustement (23) présente un trou de partie verrouillée (26) permettant à la partie verrouillée (33) de traverser radialement la deuxième partie d'ajustement (23) de manière qu'une extrémité avant de la partie verrouillée (33) fasse saillie vers l'intérieur de la deuxième partie d'ajustement (23) ;
la première partie d'ajustement (13) présente une portion de verrouillage (13b) adaptée pour faire un contact axial avec l'extrémité avant de la partie verrouillée (33) faisant saillie à l'intérieur de la deuxième partie d'ajustement (23) à une position plus proche de la partie de lame de coupe de foret (114) que l'extrémité avant de la partie verrouillée (33) pour verrouiller la deuxième partie d'ajustement (23) afin d'empêcher la deuxième partie d'ajustement (23) d'être retirée vers l'avant depuis la première partie d'ajustement (13) ;
la partie principale (32) de l'unité de retenue (30) présente une forme capable d'être amenée en déformation élastique de manière à augmenter un diamètre de la partie principale (32) pendant que la partie fixe (31) est maintenue fixe, la déformation élastique permettant à la partie verrouillée (33) d'être déplacée à partir d'une position de verrouillage dans laquelle la partie verrouillée (33) fait saillie vers l'intérieur de la deuxième partie d'ajustement (23) à travers le trou de partie verrouillée (26) pour être engagée avec la portion de verrouillage (13b), jusqu'à une position de rétraction dans laquelle la partie verrouillée (33) est rétractée radialement vers l'extérieur à l'écart de la portion de verrouillage (13b) ; et que
la première partie d'ajustement (13) est formée avec un évidement de verrouillage (14) présentant une profondeur suffisante pour permettre à l'extrémité avant de la partie verrouillée (33) dans la position de verrouillage d'être ajustée dans l'évidement de verrouillage (14), la première partie d'ajustement (13) incluant une paroi définissant l'évidement de verrouillage (14), la paroi incluant une portion située plus près de la partie de lame de coupe de foret (114) que la partie d'engagement pour servir de portion de verrouillage (13b),
**caractérisé en ce que**
la première partie d'ajustement (13) présente une surface circonférentielle extérieure cylindrique (13a) et que la deuxième partie d'ajustement (23) présente une surface circonférentielle intérieure cylindrique, et que la première partie d'ajustement (13) inclut en outre un évidement de déverrouillage qui s'étend de manière circonférentielle depuis l'évidement de verrouillage (14) et qui présente une profondeur qui se réduit avec l'augmentation d'une distance depuis l'évidement de verrouillage (14).

2. Un outil de pose d'ancrage d'après la revendication 1, sachant que la première partie d'ajustement (13) inclut une surface de guidage inclinée dans une direction telle que la surface de guidage est décalée radialement vers l'extérieur de la première partie d'ajustement (13) à partir d'une extrémité avant de la première partie d'ajustement (13) vers l'évidement de verrouillage (14) de manière à déplacer la partie verrouillée (33) progressivement radialement vers l'extérieur à mesure que l'insertion de la première partie d'ajustement (13) est avancée, tout en maintenant le contact de la surface de guidage avec l'extrémité avant de la partie verrouillée (33), l'extrémité avant de la première partie d'ajustement (13) étant l'une parmi les extrémités opposées de la première partie d'ajustement (13) et étant adjacente à la partie de lame de coupe de foret (114).

3. Un outil de pose d'ancrage d'après la revendication 2, sachant que la première partie d'ajustement (13) inclut en outre une rainure de guidage (15) qui s'étend depuis l'extrémité avant de la première partie d'ajustement (13) vers l'évidement de verrouillage (14) dans une direction parallèle à une direction axiale de la première partie d'ajustement (13), la rainure de guidage (15) présentant une surface de fond servant de surface de guidage.

4. Un outil de pose d'ancrage d'après l'une quelconque des revendications de 1 à 3, sachant que la partie verrouillée (33) présente un diamètre plus grand dans une direction perpendiculaire à une direction dans laquelle la partie verrouillée (33) fait saillie à partir de la partie principale (32) qu'un diamètre de la partie principale (32) dans une direction perpendiculaire à une direction dans laquelle la partie principale (32) s'étend.

5. Un outil de pose d'ancrage d'après la revendication 4, sachant que l'unité de retenue (30) inclut un élément de partie principale présentant une forme de tige courbée pour former la partie principale (32), et un élément de partie verrouillée formant la partie verrouillée (33) et présentant un diamètre plus grand que le diamètre de l'élément de partie principale, l'élément de partie principale et l'élément de partie verrouillée étant ajustés l'un avec l'autre de manière à permettre à une force de rappel élastique de l'élément de partie principale d'être transmise à l'élément de partie verrouillée.

6. Un outil de pose d'ancrage d'après la revendication 5, sachant que l'élément de partie verrouillée présente une rainure d'ajustement qui s'étend dans une direction circonférentielle de la deuxième partie d'ajustement (23) pour permettre à une portion de l'élément de partie principale d'être ajustée dans la rainure d'ajustement, la portion s'étendant dans la direction circonférentielle.

7. Un outil de pose d'ancrage d'après la revendication 5, sachant que l'élément de partie principale inclut en outre une portion principale formant la partie principale (32) et une portion saillante jointe à la partie principale, la portion saillante faisant saillie radialement vers l'intérieur depuis la portion principale, et que l'élément de partie verrouillée présente une forme cylindrique enfermant un trou d'insertion permettant à la portion saillante d'être insérée dans le trou d'insertion, la portion saillante étant insérée dans le trou d'insertion et l'élément de partie verrouillée constituant la partie verrouillée (33).

8. Un outil de pose d'ancrage d'après l'une quelconque des revendications de 4 à 7, sachant que l'élément de partie principale est constitué d'un premier matériau, et que l'élément de partie verrouillée est constitué d'un deuxième matériau différent du premier matériau, le premier matériau présentant un coefficient d'élasticité inférieur à celui du deuxième matériau, le deuxième matériau présentant une résistance au cisaillement supérieure à celle du premier matériau.
